# EUROPEAN PATENT APPLICATION

(11) **EP 1 491 395 A2**
(43) Date of publication of application: **29.12.2004**
(21) Application number: 04014725.8
(22) Date of filing: 23.06.2004
(51) Int. Cl.: B60N 2/66

(54) **Backrest support structure with pressure map adjustment**

(30) Priority: 23.06.2003 DE 10328044
(71) Applicant: FICO CABLES, LDA, 4471 Maia (PT)
(72) Inventor: Vilela Barros, Joao Alberto, 4470-263 Vermoim-Maia (PT); De Castro, Manuel Antonio, 4470-263 Vermoim-Maia (PT)
(74) Representative: Hess, Peter K., Dipl.-Phys.

(57) **Abstract**

The present invention comprises a support structure 1 for mounting within a backrest frame 34 of a vehicle seat, wherein the support structure 1 is a one-piece element, which supports the padding of the backrest. The padding gets a maximum supporting surface whereby the pressure distribution onto the back of the passenger can evenly be distributed. Further, the support structure 1 comprises only of one single part, so that it must not be assembled from a plurality of parts.

## Description

### 1. Field of the invention

The present invention relates to a backrest support structure for the backrest of a vehicle. Particularly, this invention relates to a backrest support structure, wherein the pressure distribution onto the back of the vehicle passengers can positively be influenced.

### 2. Prior art

In the prior art different embodiments for the construction of backrests are known. In the easiest case the backrest comprises of a sheet metal frame, in which the support element is mounted, which comprises essentially of a surrounding wire frame in which horizontal wires are suspended. Onto the sheet metal frame and the support element, a padding is attached and the backrest afterwards covered with upholstery. Such an arrangement is for example known from the US 6,499,803 or from the GB 1 545 186.

Further, the prior art discloses different backrests, in which an adjustable lumbar support is provided. In such backrests normally the lower portion of the backrest, i.e. the lumbar area, can be adjusted to adapt the suspension of the backrest to the vehicle passengers. Examples for such adjustable lumbar supports can be found in WO 94/00039 or in the EP 0 552 904 A1. It is a disadvantage of the prior art that the suspension effect of the whole backrest onto the body of the passenger is often not examined, but only that of the lumbar area. It is desired, to evenly load the whole back of the passenger and to avoid extensive support pressures. Future, the used lumbar supports are often separate elements, which are only insufficiently integrated into the remainder support structure, so that the level of comfort of the backrest is not very high. The used support structures and lumbar supports are often to be manufactured very complicated and are comparable heavy. Herein there is the need for simplification of production and for lighter solutions. Further, in many solutions, the pressure is unevenly distributed from the support structure to the padding, whereby a comparable thick padding is needed.

It is therefore the problem underlying the present invention to provide a support structure, which overcomes the above-mentioned drawbacks, i.e. to particularly evenly support the complete back of the passenger, to be easily to be manufacture and to assemble and to allow a light-weight and thin backrest support construction.

### 3. Summary of the invention

The above-mentioned problems are solved by a support structure according claim 1. In particular, the problems are solved by a support structure for mounting within a backrest frame of a vehicle seat, wherein the support structure is a one-piece element, which supports the padding of the backrest. The padding gets a maximum supporting surface whereby the pressure onto the back of the passengers can be adjusted. This means, that the pressure map, which shows the pressure distribution onto the back of a passenger can be designed according ergonomic requirements and comfort for the passengers. This for example results in a compensation of the pressure map, so that high pressure peaks onto the back of the passengers are avoided. Due to the one-piece support structure, which preferably has a selective stiffness, the pressure map can be configured as desired. The exact pressure distribution relates from the different stiffness of the support structure at particular zones of the backrest in cooperation with the padding. A comparable thin padding can be used. So, the complete backrest will be very lightweight.

Further, the support structure comprises only of one single part, so that it must not be assembled from a plurality of parts. So, it is cost-effective in production and assembly.

In a preferred embodiment, the support structure essentially fills the complete space within the backrest frame. The support structure thereby supports the complete area of the backrest, and not only the lumbar area. No further supporting elements are required and the padding is supported very evenly.

Preferably, the support structure is integrally formed of a plastic material by injection molding, deep drawing or thermoforming. Therefore, it is particularly light-weight and stable and can be cost-efficiently produced.

In another embodiment, the support structure is integrally formed of sheet metal by deep drawing and stamping.

Preferably, the support structure comprises a stiff and flat shoulder area and a lumbar area, which is integrally formed with the shoulder area, wherein the lumbar area is resiliently connected to the shoulder area. The support effect of the particularly stressed lumbar area of the backrest can so be adjusted independently from the support effect of the shoulder area, for example more resilient. Further, the lumbar area may be differently contoured to better support the back of the passenger.

In a further preferred embodiment, the support structure further comprises an integrated frame area, which surrounds the support structure, and wherein mounting means are connected to the frame area to mount the support structure within the backrest frame. The frame area preferably acts for the mounting of the support structure within the backrest frame and also reinforces the support structure. Further, the frame area acts for the distribution of the forces, which are locally introduced by the mounting means to the support structure, so that an evenly distributed support effect for the padding is achieved.

In another embodiment, the support structure comprises lateral wings and an extension to the top, which extend over the backrest frame. By means of these frames and the extension, the support structure engages directly the backrest frame, so that it can very easily be mounted thereon, without particularly formed brackets, springs or hooks.

In a further preferred embodiment, the lumbar area of the support structure is adjustable via first Bowden cables, so that the lumbar area is displaceable to the passenger or away from the passenger. So, a first possibility of adjustment of the support structure is given, namely a more strong or more weak lumbar area which extends from the backrest plane. This kind of adjustment is also referred to as horizontal actuation, since the actuation direction is essentially horizontal if the backrest of the seat is in an essentially vertical orientation.

In a further preferred embodiment, the lumbar area is adjustable via second Bowden cables, so that the bending of the lumbar area can be changed. So, a second possibility of adjustment of the support structure is realized, namely a variation of the curvature of the lumbar area. This kind of adjustment is also referred to as vertical actuation, since the actuation direction is essentially vertical if the backrest of the seat is in an essentially vertical orientation.

Preferably, the second Bowden cables are mounted at a vertical cable mounting, which extends behind the lumbar area and which is fixed at the lower frame area, and at the shoulder area. The vertical cable mounting forms a bridge beneath the curved lumbar portion of the support structure and allows an easy mounting of the second Bowden cables.

Preferably, the second Bowden cables are connected at an angle A at the vertical cable mounting, so that the second Bowden cables engage the lower end portion of the lumbar area inclined with respect to the plane of the shoulder area. In this arrangement, the bending of the lumbar area can be changed, whereby only a low force must be applied by the second Bowden cables.

In a further preferred embodiment, the support structure is connected to the backrest frame by means of elastic hooks, wherein the hooks comprise a loop. The loop in the hook provides a spring effect and facilitates an assembly of the relatively stiff support structure at the backrest frame.

### 4. Short description of the drawings

In the following preferred embodiments of the present invention are described with respect to the drawings in which:
- Fig. 1:: shows a first preferred embodiment of the present support structure according to the invention, mounted within a backrest frame and provided with mounting means, in a three dimensional view;
- Fig. 2:: shows a support structure according to the invention and according to the first embodiment of Fig. 1 in a three dimensional view, shown from the padding side;
- Fig. 3:: shows the support structure from Fig. 2, additionally provided with a horizontal cable mounting, in a three dimensional view, shown from the backside;
- Fig. 4:: shows the support structure from Fig. 2, additionally with mounting means and actuation elements for the displacement of the lumbar area, in a three dimensional view, shown from the padding side;
- Fig. 5:: shows the support structure from Fig. 4, in a three dimensional view, shown from the backside;
- Fig. 6:: shows the support structure from Fig. 2, additionally with further actuation elements for the variation of the curvature of the support area, in a three dimensional view, shown from the backside;
- Fig. 7:: shows the support structure from Fig. 6, with further actuation elements, in a three dimensional view, shown from the backside;
- Fig. 8:: shows the support structure in a schematically sectional side view for demonstration of the angle conditions during the adjustment of the curvature of the lumbar area;
- Fig. 9:: shows a further embodiment of the support structure according to the invention, with integrated lateral wings and an extension to the top, hinged in a backrest frame, in a three dimensional view, shown from the padding side;

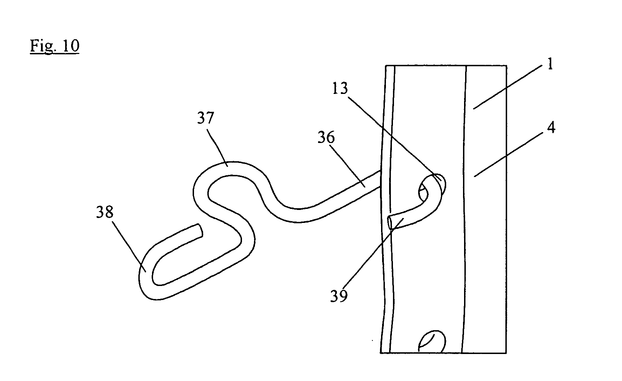

- Fig. 10:: shows an embodiment of an elastic hook, hinged into to frame area of a support area according Fig. 2, in a three dimensional view.

### 5. Detailed description of the preferred embodiments

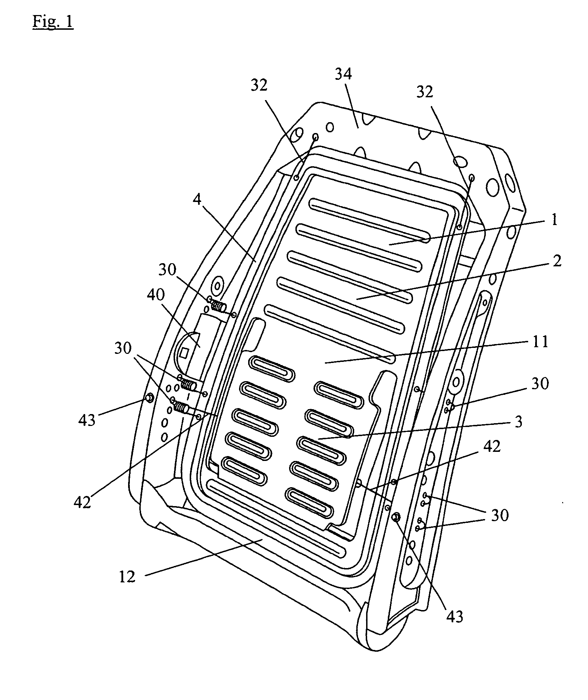

The preferred embodiments of the present invention are now shown using the accompanying drawings. In Fig. 1 a first embodiment of the present invention is shown. Fig. 1 shows a backrest frame 34 of a vehicle seat in which a support structure 1 is mounted. The backrest frame 34 essentially comprises of shaped sheet metal profiles which are connected to each other to form a frame structure. The backrest frame provides stability to the backrest and serves for the mounting of the support structure 1 or for the mounting of further elements like for example the actuation element 40. The support structure 1, which is more specifically described in the following, is mounted within the backrest frame 34 by means of springs 30 and brackets 32. The support structure thereby essentially fills the complete space within the backrest frame 34.

As shown in Fig. 1, the support structure 1 is connected to the upper portion of the backrest frame 34, by means of two brackets 32, which are hinged within the upper portion of the frame area 4 of the support structure 1. The support structure 1 is elastically connected with the side elements of the backrest frame 34 by means of three springs 30 respectively at each side at the lower lateral frame area 4. The support structure 1 already provides cushioning for the back of the passenger by means of this elastically kind of hinging with respect to the backrest frame 34.

The actuation element 40, which is mounted at the right lateral frame of the backrest frame 34, acts for an adjustment of the support structure 1 in its lumbar area 3. This is explained in detail further below.

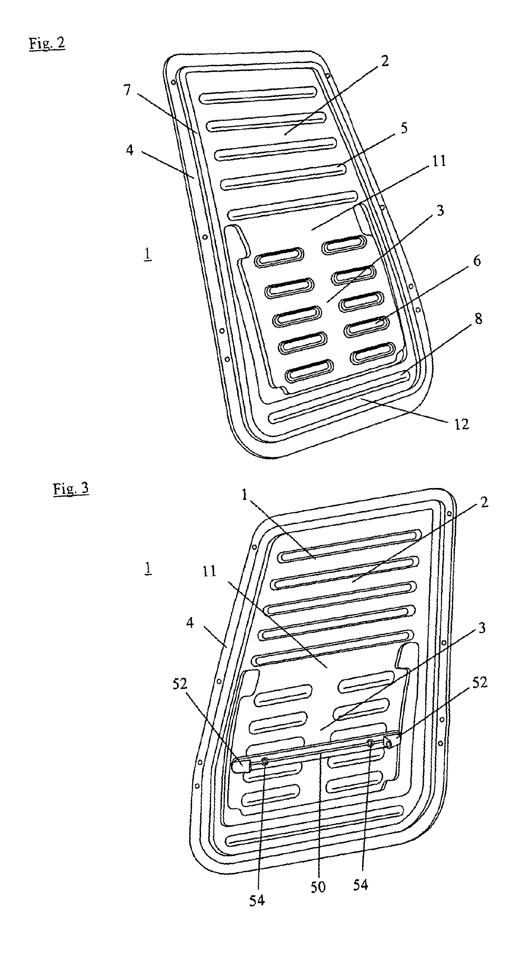

Fig. 2 shows a first embodiment of the support structure 1 according to the invention from the padding side. Fig. 3 shows the same support structure 1 from the backside. As shown, the support structure 1 comprises of a single, essentially flat element, which can roughly be divided into three areas. These three areas are the essentially stiff shoulder area 2, the essentially flexible lumbar area 3 and the frame area 4, which surrounds the complete support structure 1.

The shoulder area 2 is provided essentially stiff and acts for supporting the padding material at the upper part of the backrest. The shoulder area 2 is provided with horizontal shoulder ribs 5 to increase the mechanical stability and to better fix the padding material, which later rests on it. In the embodiment shown in Fig. 2 there are five shoulder ribs 5 formed into the shoulder area 2, wherein the shoulder ribs 5 extend to the back side.

The frame area 4 surrounds the complete support structure 1 and acts for the anchoring of the support structure 1 within the backrest frame 34 of the vehicle seat.

For this purpose, holes or other hinging devices are formed into the frame area 4 for the brackets 32 or the springs 30 at appropriate positions. To strengthen the frame area 4 of the support structure 1 a surrounding rib 7 is provided, which is formed into the frame area 4. In the shown preferred embodiment, the surrounding rib 7 extends to the front, i.e. in direction to the padding and surrounds the complete support structure 1.

The lumbar area 3 is located at the lower half of the support structure 1. It is essentially flexibly provided and connected at its upper end to the shoulder area 2 by a transition area 11. The transition area 11 is a resilient connection between shoulder area 2 and lumbar area 3, so that the lumbar area 3 may elastically move to the front or the back with respect to the remainder of the support structure 1.

As shown in Fig. 2 a lower rib 8 may be provided below the lumbar area 3, which is connected to the lower frame area 12.

The support structure comprises of an essentially flat shaped structure made of sheet metal or of a plastic material, wherein plastic material is preferred due to its low weight and its simple manufacturing by injection molding or drawing. The support structure 1 is shaped, such that the flexibility of the shoulder area 2 and the lumbar area 3 is adapted to the padding material, which rest upon the support structure 1, so that the pressure distribution onto the back of the passenger can be optimized. This is known as "pressure map adjustment". This means, that the pressure map, which shows the pressure distribution onto the back of a passenger can be designed according ergonomic requirements and comfort for the passengers. So, the stiffness of the support structure 1 is selectively determined, beside other parameters, by the shape and depth of the ribs 5, 6 and 7. The flexibility of the lumbar area 3 is determined by the direction of the ribs 6, as well as the thickness of the material of the transition area 11 and the shape and stiffness of the lumbar area 3 itself. The thicker the transition area 11 is provided, the stronger is the support effect of the lumbar area 3 is.

The support structure 1 is preferably made of a plastic material by injection molding, deep drawing or any other thermoforming process. To provide an increased stability also a glass fiber or carbon fiber reinforced plastic material can be used. In another preferred embodiment the support structure 1 is produced by deep drawing and stamping of sheet metal material.

In the above described embodiment, a support structure 1 without adjustment means is used. Its cushioning and support features do only depend on its design and how the support structure 1 is mounted within the backrest frame 34 for example by means of springs 30.

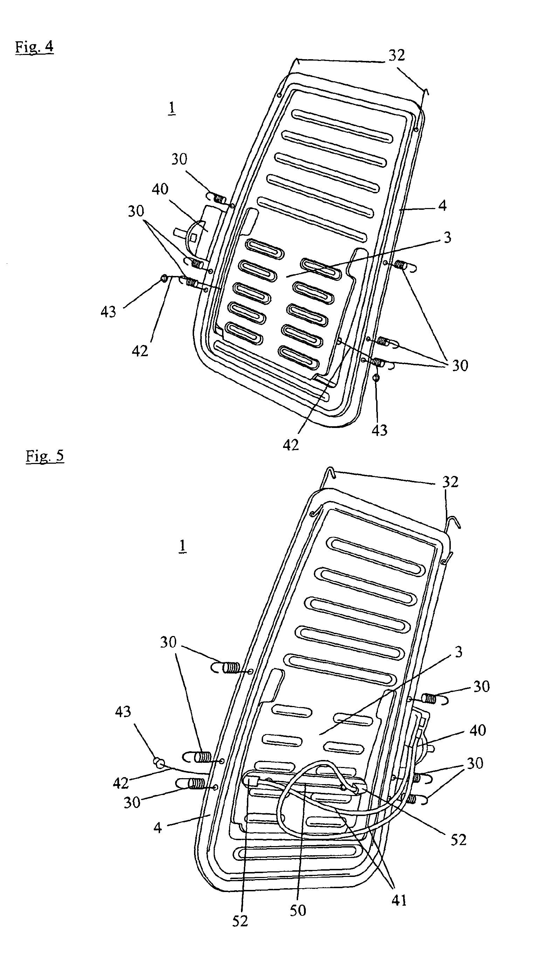

In the following a further embodiment of the present invention is described by means of figures 4 - 8, wherein the lumbar area 3 can be geometrically adjusted. So, the seat can be adjusted to the back of the individual vehicle passenger.

The adjustment of the lumbar area 3 can be done in different ways. In figures 4 and 5 a first possibility for the adjustment is shown, wherein the lumbar area 3 can be adjusted to or away from the passenger. In the following this kind of adjustment is referred also as displacement of the lumbar area 3 or as horizontal actuation.

For the displacement of the lumbar area 3 (i.e. horizontal actuation), the support structure 1 is provided with a first actuation element 40, which in a first embodiment is connected to the lumbar area 3 via two first Bowden cables 41. The sheaths of the Bowden cables 41 rest against a horizontal cable mounting 50, which is connected to the backside of the lumbar area 3 via connecting means 54 (screws, rivets, etc.). The horizontal cable mounting 50 is an elongated, stiff element, preferably of metal or plastic material, which acts for horizontally strengthening of the lumbar area 3 in its middle part and above all to allow the Bowden cables 3 to rest against the lumbar area 3. For this purpose, the ends of the cable sheaths of the Bowden cables 41 are inserted into first cable sheath receptacles 52, which are mounted horizontally at the cable mounting 50. The cables 42 of the Bowden cables 41 run along the side of the lumbar area 3 to the front and are connected to the backrest frame 34 via cable ends 43 as shown in Fig. 1.

The lumbar area 3 is displaced to the front in direction to the passenger during an tightening of the Bowden cables 41 by the first actuation element 40. The lumbar area 3 is displaced away from the passenger during releasing of the Bowden cables 41 due to its inner stiffness and the load applied by the passenger. The lumbar area 3 may therefore be more or less accentuated.

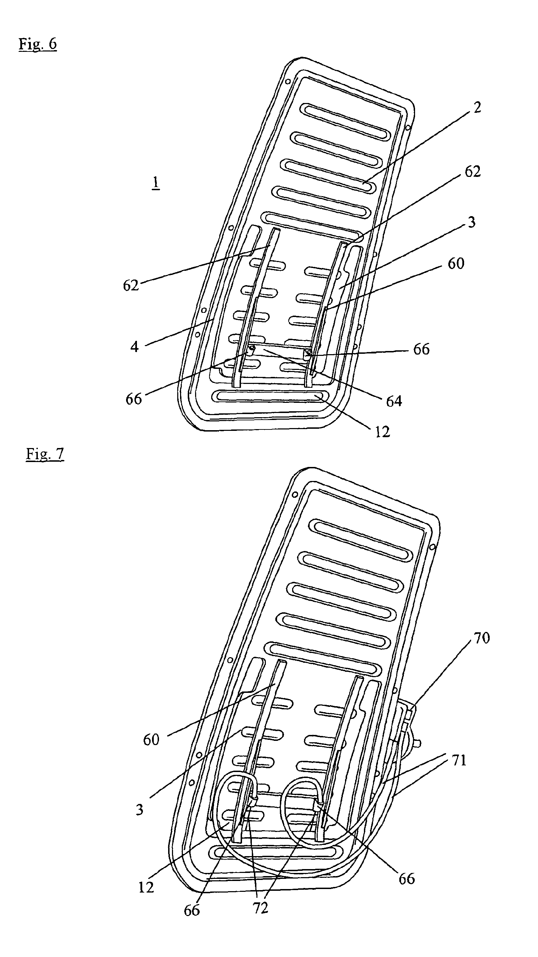

A second possibility for the adjustment of the lumbar area is shown in figures 6, 7 and 8. In this second possibility the curvature of the lumbar area 3 can be changed. This is done by a vertical actuation of the lumbar area 3. For this purpose a vertical cable mounting 60 of a stiff plastic material or metal is mounted behind the flexible lumbar area 3 of support structure 1. The mounting of the vertical cable mounting 60 may also be done by connecting means like rivets, screws or the like. The vertical cable mounting extends the complete space behind the lumbar area 3. It comprises of two vertical support elements 62, which are mounted at the support structure 1 and of a horizontal bridge element 64, which connects the two vertical support elements 62 with each other. So, a stiff and essentially H-shaped structure 60 is formed, which acts for the mounting of the ends of the sheaths of second Bowden cables 71. For this purpose, the ends of the sheaths of the second Bowden cables 71 are inserted into second cable sheath receptacles 66, which are vertically mounted at the bridge element 64. The cable ends 73 of the cables 72 of the Bowden cables 71 are connected to the lower end portion 12 of the lumbar area 3.

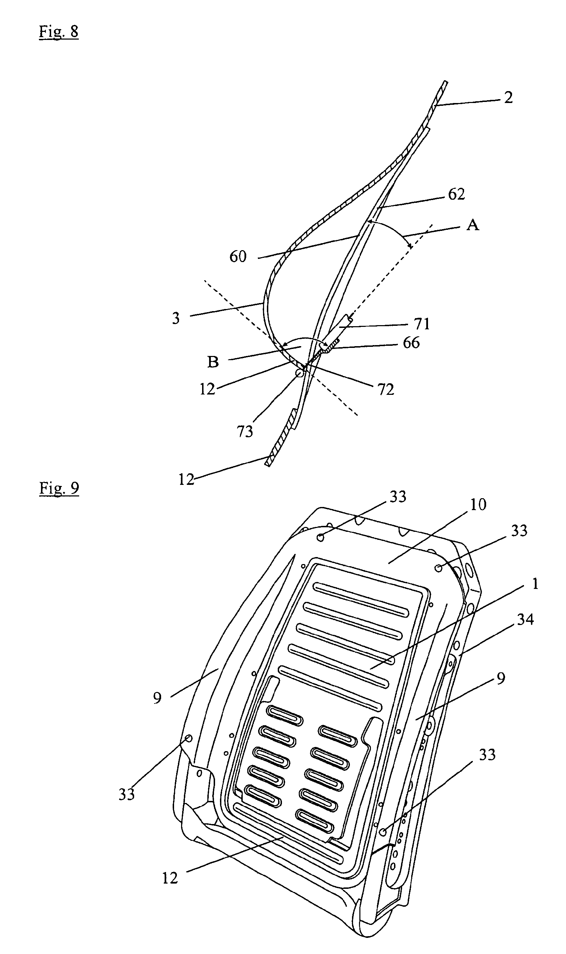

The lower end portion 12 of the lumbar area 3 is displaced in direction of the shoulder area 2 during tightening of the Bowden cables 71 via a second actuation element 70. So, the curvature of the lumbar area 3 is increased and the lumbar area 3 bows in direction to the passengers, as schematically shown in Fig. 8. The lower end portion 12 rests against the two vertical support elements 62 during a loading of the lumbar area 3.

The curvature of the lumbar area 3 decreases during releasing of the Bowden cables 71 due to its inner stiffness and the loading by the passengers. Therefore, the lumbar area 3 may be more or less curved.

As shown in Fig. 8 the two second cable sheath receptacles 66 are preferably inclined with respect to the plane of the support structure 1 by an angle A. Therefore, also the ends of the cable sheaths of the Bowden cables 71 which are mounted therein are inclined. So, the introduction of a pulling force to the lower end portion 12 via the cables 72 is done at an angle of A > 0°, so that the introduction of the curvature is facilitated. Doing so, the required force is lower compared to a mounting parallel to the plane of the support structure 1 (A = 0°) particularly at the beginning of the adjustment of the lumbar area 3. In Fig. 8 the support structure 1 is shown, wherein the lumbar area 3 is vertically actuated to its full extend. Thereby an angle B of 90° results between the lower end portion 12 of the lumbar area 3 and the cables 72.

The first possibility for adjustment (figures 4 and 5) and the second possibility for adjustment (figures 6, 7 and 8) can be combined with each other. Then, the lumbar area 3 can be displaced to and away from the passenger and also be changed in its curvature.

A further preferred embodiment of the present invention is shown in Fig. 9. It shows a support structure 1 which comprises lateral integrated wings 9, that extend to the front over the backrest frame 34 or surround it. Further, the support structure 1 comprises an extension to the top, which also extends over the backrest frame 34. The support structure 1 can very easily be mounted at the backrest frame 34 by means of the wings 9 and the extension 10. For this purpose simple connecting means 33, as for example rivets, screws or plastic clips may be used, that connect the support structure 1 with the backrest frame 34.

This embodiment provides a harder cushioning than the above described embodiment, since here the support structure 1 is rigidly connected to the backrest frame 34 and not elastically hinged within it, as shown in Fig. 1. Here, the support structure forms a fixed shell comprising a flexible lumbar area 3, wherein the shell essentially completely fills the space within the backrest frame 34.

This embodiment of the support structure 1 can also be combined with both possibilities for adjustment as described above.

A medium cushioning, which lies between both above described embodiments of figures 1 and 9, is provided by the use of elastic hooks 36, which replace the springs 30 of the first embodiment. The elastic hook 36 connects the support structure 1 within the backrest frame 34. The hook 36 comprises an Ω-shaped loop 37, which provides a medium spring effect. The hook 36 comprises a first hook shaped end 38 for hinging within the backrest frame 34 and a second hook shaped end 39, which is hinged into a hole 13 of the frame portion 4 of the support structure 1. The hook 36 is extendable to a certain extend due to the Ω-shaped loop 37 thereby facilitating its assembly.

### List of reference signs

- 1: support structure
- 2: shoulder area
- 3: lumbar area
- 4: frame area
- 5: shoulder ribs
- 6: lumbar ribs
- 7: surrounding rib
- 8: lower rib
- 9: wings
- 10: extension
- 11: transition area
- 12: lower end portion of lumbar area
- 13: hole
- 30: springs
- 32: brackets
- 33: connecting means
- 34: backrest frame
- 36: elastic hook
- 37: loop
- 38: first hook shaped end
- 39: second hook shaped end
- 40: first actuation element
- 41: first Bowden cables
- 42: cables
- 43: cable ends
- 50: horizontal cable mounting
- 52: receptacle for cable sheath
- 54: connecting means
- 60: vertical cable mounting
- 62: vertical support elements
- 64: horizontal bridge element
- 66: receptacle for cable sheath
- 70: second actuation element
- 71: second Bowden cables
- 72: cables
- 73: cable ends

## Claims

1. Support structure (1) for mounting within a backrest frame (34) of a vehicle seat, wherein
the support structure (1) is a one-piece element, which supports the padding of the backrest.

2. Support structure according claim 1, wherein the support structure (1) essentially fills the complete space within the backrest frame (34).

3. Support structure according one of the claims 1 or 2, wherein the support structure (1) is integrally formed of a plastic material by injection molding, deep drawing or thermoforming.

4. Support structure according one of the claims 1 or 2, wherein the support structure (1) is integrally formed of sheet metal by deep drawing and stamping.

5. Support structure according one of the claims 1 to 4, wherein the support structure (1) comprises a stiff and flat shoulder area (2) and a lumbar area (3), which is integrally formed with the shoulder area (2), wherein the lumbar area (3) is resiliently connected to the shoulder area (2).

6. Support structure according one of the claims 1 to 5, wherein the support structure (1) further comprises a frame area (4), which surrounds the support structure (1) and wherein mounting means (30, 32, 36) are connected to the frame area (4) to mount the support structure (1) within the backrest frame (34).

7. Support structure according one of the claims 1 to 6, wherein the support structure (1) comprises lateral wings (9) and an extension (10) to the top, which extend over the backrest frame (34).

8. Support structure according one of the claims 1 to 7, wherein the lumbar area (3) is adjustable via first Bowden cables (41), so that the lumbar area (3) is displaceable to the passenger or away from the passenger.

9. Support structure according one of the claims 1 to 8, wherein the lumbar area (3) is adjustable via second Bowden cables (71), so that the bending of the lumbar area (3) can be adjusted.

10. Support structure according claim 9, wherein the second Bowden cables (71) are mounted at a vertical cable mounting (60), which extends behind the lumbar area (3) and which is fixed at the lower frame area (4) and at the shoulder area (2).

11. Support structure according claim 10, wherein the second Bowden cables (71) are fixed at the vertical cable mounting (60) at an angle (A), so that the second Bowden cables (71) inclined engage the lower end portion (12) of the lumbar area (3) with respect to the plane of the shoulder area (2).

12. Support structure according one of the claims 1 to 11, wherein the support structure (1) is connected to the backrest frame (34) by means of elastic hooks (36), wherein the hooks (36) comprise a loop (37).
